Europäisches Patentamt

European Patent Office

Office européen des brevets

(19)

(11) Publication number: **0 128 625**
**A1**

# EUROPEAN PATENT APPLICATION

(12)

(21) Application number: 84200826.0

(22) Date of filing: 12.06.84

(51) Int. Cl.³: **G 11 B 5/12**, G 11 B 5/221, G 11 B 5/25

(30) Priority: 13.06.83 NL 8302093

(43) Date of publication of application: 19.12.84
Bulletin 84/51

(84) Designated Contracting States: **AT DE FR GB IT**

(71) Applicant: **N.V. Philips' Gloeilampenfabrieken,**
Groenewoudseweg 1, NL-5621 BA Eindhoven (NL)

(72) Inventor: **Druyvesteyn, Willem Frederik, c/o INT.**
OCTROOIBUREAU B.V. Prof. Holstlaan 6, NL-5656 AA
Eindhoven (NL)

(74) Representative: **Koppen, Jan et al, INTERNATIONAAL**
OCTROOIBUREAU B.V. Prof. Holstlaan 6, NL-5656 AA
Eindhoven (NL)

(54) Magnetic transducing head for writing information on high-coercive recording media.

(57) A magnetic transducing head (1) having two core parts of ferrite. In order to prevent saturation of such a magnetic head which comprises two core parts of ferrite which have gap bounding faces between which a transducing gap is formed upon writing a recording medium 10 having a coercive force of 80 kA/m or higher, the gap bounding face of each of the core parts has a layer (12, 13) of a metallic magnetic material having a higher saturation magnetisation than the ferrite.

This effect is optimally used in that a winding aperture (3) is provided only in one of the core parts (5) and in that the other core part (6) has at least one recess (16, 17) in its gap bounding face which defines the magnetic gap width W of the magnetic head (1).

EP 0 128 625 A1

ACTORUM AG

Magnetic transducing head for writing information on high-coercive recording media.

The invention relates to a magnetic transducing head having a magnet core of two core parts of ferrite which have gap bounding faces between which a transducing gap is formed, the gap bounding face of each of the core parts comprising a layer of metallic magnetic material having a higher saturation magnetization than the ferrite.

It is known that the use of ferrites, in particular monocrystalline Mn-Zn ferrites, as a magnet core material for magnetic transducing heads is desired in particular in systems for magnetic tape recording and playback, for example audio and video tape recorders, since ferrites have the advantages of a high resistance to wear, a comparatively high resistivity and good magnetic properties, for example, with respect to coercive force and permeability, and good frequency characteristics.

Magnetic fields which are generated at the area of the transducing heads by a magnetic head to write information on a magnetic medium are limited by the saturation magnetisation of the material of the core of the magnetic head. Magnetic heads for the present-day video recorders usually have a core of Mn-Zn ferrite. This type of material has a saturation magnetisation of approximately 0.5 Tesla at room temperature. At temperatures slightly above room temperature their magnetisation also satisfies the requirements imposed by the writing of information on conventional tapes, for example $CrO_2$ tapes having a coercive force $H_c$ of approximately 56 kA/m.

However, in order to improve the quality of the video recording process there is a tendency towards replacing the conventional magnetic tapes by magnetic tapes having a higher coercive force, for example, tapes on the basis of pure Fe which have a $H_c$ of approximately 80 to 160 kA/m.

A magnetic head having a ferrite core cannot readily write information on such tapes. In fact, for writing tapes with a high coercive force, the writing field of the magnetic head should also be high, which is not possible in that the ferrite core becomes unsaturated. From the Japanese patent application laid open to public inspection Ns. 55 - 58824 (A) it is known that this problem can be tackled by using a transducing head having a magnet core of two core parts of ferrite having gap bounding faces between which a tranaducing gap is formed, the gap bounding face of each of the core parts having a layer of a metallic magnetic material having a higher magnetisation than the ferrite.

The effect of the known transducing head is based on the fact that by providing, on the core parts of ferrite, a comparatively thin layer of a material having a higher saturation magnetisation than the ferrite, saturation effects (near the edges of the transducing gap) do not occur until much higher field strengths. As a result of this the writing field may be higher than in ferrite heads having gap faces which are not coated with a material having a higher saturation magnetisation than ferrite, namely so much higher that recording media having coercive forces of 80 kA/m and higher can be written.

The known head comprises two core parts of uniform thickness each having a recess on the side facing the transducing gap. The two recesses in the two core parts together constitute a winding aperture through which a coil is wound. Such a head having a uniform thickness of the core parts has a gap width which is equal to the width of the core parts. For the present-day video applications, transducing heads are required having gap widths which are only a few tens of microns.

From a structural point of view it is not permissible for the core parts to have such a small width. Therefore, in practice there is started from considerably wider core parts which, at the area of the transducing gap in their tape contact face and the adjoining part of their side faces, are provided with recesses with a mutual distance which is equal to the desired gap width. If this measure was applied to the magnetic head known from the above-mentioned publication, a head would result in which the effect of the coating of the gap faces with a magnetic material having a higher saturation magnetisation than the material of the core parts is not optimum.

According to the invention, in order to reach an optimum effect, only one of the core parts should be provided with a winding aperture and the other core part should have at least one recess in its gap bounding face which defines the magnetic gap width of the transducing head. Only with this head configuration is an optimum variation of the magnetic flux ensured. An important aspect in coating the gap faces of a ferrite head is that such thin layers of the metallic magnetic material can be used that eddy currents have little effect as compared with the case in which four parts (poleshoes) of metallic magnetic material are used. Thicknesses from 500 to 5,000 nm have proved to be very suitable. Below 500 nm no significant improvement occurs. Above 5,000 nm eddy currents may occur. These thicknesses are such that the layers, just as the layer of dielectric material which generally forms the gap, can be provided on the faces of the core parts by means of a sputtering method. That the technique of providing the layers with high saturation magnetisation is compatible with the technique with which the gap forming material is provided in the conventional heads, is an important advantage in the realisation.

Metallic materials having a higher saturation magnetisation than ferrite are, for example, alloys on

0128625
20.1.1984

the basis of Ni-Fe with approximately 20% by weight of Ni ($\sim$ 1.0 Tesla), alloys on the basis of Al-Fe-Si with approximately 5 % by weight of Al and approximately 10% by weight of Si ($\sim$ 1.6 Tesla), and amorphous magnetic alloys.

The invention also relates to a magnetic transducing head destined for use in the above-described recording and playback system.

An embodiment of the invention will be described by way of example with reference to the drawing, in which

Fig. 1 is a diagrammatic perspective view of a system having a magnetic head and a recording medium;

Fig. 2 is an elevation on an enlarged scale of a detail of the magnetic head of fig. 1,

Fig. 3 shows a diagram in which the writing field H of two different magnetic heads is plotted as a function of the writing current $\underline{i}$.

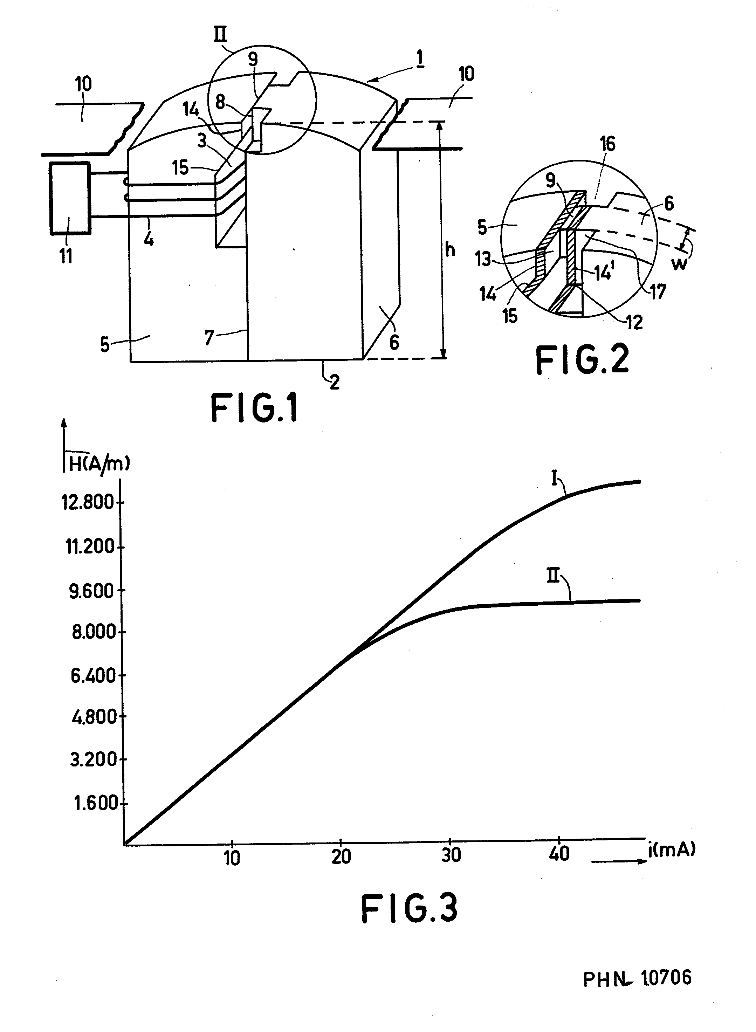

Fig. 1 shows a magnetic head 1 having a magnet core 2. The magnet core 2 has a winding aperture 3 through which a coil 4 is wound. The magnet core 2 is formed by two core parts 5, 6 of (monocrystalline) Mn-Zn ferrite which are bonded together by means of a bonding material (for example, glass) in the areas 7, 8. As a result of this a transducing gap 9 is formed at 8. During operation the magnetic head 1 is brought in a flux-coupling relationship with successive parts of a magnetic recording medium 10 in which energisation device 11 conveys current through the coil 4.

As shown in fig. 2 which is an enlarged detail of the head 1 of fig. 1, the faces of the core parts 5 and 6 which bound the transducing gap 9 are coated with layers 12 and 13. The layers 12 and 13 consist of a (metallic) magnetic material, preferably an amorphous magnetic alloy having a considerably higher saturation magnetisation than Mn-Zn ferrite. The thickness of the layers 12 and 13 which are preferably provided on the core parts 5, 6 by means of sputtering is between 500 and 5,000 nm. A layer of a non-magnetisable material, for example glass and/or quartz, defining the transducing gap 9 is present between the layers 12 and 13. The thickness of said layer which may also serve to bond the core parts 5, 6 together in the present-day video head is between 100 and 700 nm.

According to the invention the face of core part 6 which bounds the gap 9 has two recesses 16, 17 at a mutual distance which defines a magnetic gap width W of, for example, $20\,\mu m$ while the core part 5 in which the winding aperture 3 is provided has maintained its original width of, for example, $40\,\mu m$.

The desired optimum effect according to the invention is obtained only if the gap bounding faces of the two core parts are coated with a layer of a metallic magnetic material. For the ferrite core part in which the winding aperture is provided it is desired that not only the gap bounding face itself, in this case the gap bounding face 14, is provided with a layer of metallic magnetic material, but that also the face of the core part adjoining the gap bounding face, in this case the face 15, is provided with such a layer. It is desirable for the core part 6 to be provided with such a layer on the side facing the gap 9 throughout the height h.

For illustration of the effect of the coating of the gap faces, the writing field at the area of the gap of a (video) magnetic head of the fig. 1 type, i.e. with coated gap faces but without the recesses 16, 17 which are shown in fig. 2, in which the layers 12, 13 were formed by Ni-Fe layers having a thickness between 2 and $5\,\mu m$ and the layer defining the thickness of the transducing gap 9 was less than $0.5\,\mu m$, was measured by means of a magnetic-field-sensitive sensor which was placed at a distance of $3\,\mu m$ above the gap 9. The measured field strength H as a function of the current i through the coil 4 is shown in fig. 3 (curve I).

0128625

For comparison, the writing field is also shown of a ferrite magnetic head which is not provided with layers 12, 13 but is otherwise identical. In fig. 3 it is obvious that at current strengths at which the ferrite has become saturated, the field strength of a head with coated gap faces still increases.

It is to be noted that the writing field immediately near the gap is much larger than the values which were measured at a distance of 3 $\mu$m to produce the fig. 3 graph.

A transducing head having gap faces coated with a 2 $\mu$m thick layer of a magnetic Al-Fe-Si alloy (length of the transducing gap smaller than 0.5 $\mu$m) has been used in a (helical scan) video recording experiment and compared with a conventional ferrite head. Signals were written with both heads on magnetic tapes having coercive forces of 55 kA/m (tape 1), 88 kA/m (tape 2), and 128 kA/m (tape 3), respectively, which were moved past the heads at a relative speed of 3.2 m/sec. The recorded signals were read by means of a reference reading head having a transducing gap whose length was smaller than 0.3 $\mu$m. The recorded signals comprise a (high-frequency) video component (frequency 4.5 MHz), a chroma-component (frequency 625 kHz) and a (low-frequency) tracking component (frequency 100 kHz).

The difference in output voltage upon reading the video signal recorded by the first head and the video signal recorded by the conventional head was 0 dB (tape 1), 4 dB (tape 2) and 6 dB (tape 2). So the coating of the gap faces results in a significant improvement of the writing processes of high-frequency signals on magnetic tapes having a coercive force above 80 kA/m, the improvement upon writing on tapes having a coercive force of 128 kA/m being even more significant than the improvement upon writing on tapes having a coercive force of 88 kA/m.

At frequencies lower than 4.5 MHz it also ap-

0128625

pears that an improvement of the writing process on magnetic tapes having coercive forces of 88 and 128 kA/m,
respectively, can be achieved.

The chroma-signal recorded by means of the
first head induced in the reference head an approximately equal voltage as compared with the chroma-signal
(tape 1) and an at least 1.5 times higher voltage (tapes
2 and 3) recorded by the conventional head.

The same effect was found with regard to the
tracking signal.

0128625

CLAIMS

1.      A magnetic transducing head having a magnetic core of two core parts of ferrite which have gap bounding faces between which a transducing gap is formed, the gap bounding face of each of the core parts comprising a layer of a metallic magnetic material having a higher saturation magnetisation than the ferrite, characterized in that only one of the core parts has a winding aperture and the other core part has at least one recess in its gap bounding face which defines the magnetic gap width of the transducing head.

2.      A magnetic transducing head as claimed in Claim 1, in which the thickness of the layer of metallic magnetic material is between 500 and 5,000 nm.

3.      A magnetic transducing head as claimed in Claim 1 or 2 in which the layer of metallic magnetic material comprises a material selected from the group comprising alloys on Ni-Fe basis, alloys on the basis of Al-Fe-Si and amorphous magnetic alloys.

4.      A magnetic transducing head as claimed in Claim 1, 2 or 3, in which the layers of metallic magnetic material are provided by sputtering and the transducing gap is formed by a layer of dielectric material which is also provided by sputtering.

FIG.1

FIG.2

FIG.3

0128625

European Patent
Office

EUROPEAN SEARCH REPORT

Application number

EP 84 20 0826

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | PATENTS ABSTRACTS OF JAPAN, vol. 6, no. 145 (P-132)[1023], 4th August 1982; & JP - A - 57 64 324 (HITACHI SEISAKUSHO K.K.) 19-04-1982 * whole document * | 1 | G 11 B 5/12 G 11 B 5/221 G 11 B 5/25 |
| A | IDEM | 3,4 | |
| Y | FR-A-2 326 845 (FIRMA GRUNDIG E.M.V.) * page 1, lines 1-24; page 2, lines 6-28; claim 1; figures 1-5 * | 1 | |
| A | PATENTS ABSTRACTS OF JAPAN, vol. 1, no. 44, 27th April 1977, page 2750 E 76; & JP - A - 51 140 708 (NIPPON VICTOR K.K.) 12-03-1976 * abstract * | 1,4 | TECHNICAL FIELDS SEARCHED (Int. Cl. ³) |
| A | PATENTS ABSTRACTS OF JAPAN, vol. 5, no. 96 (P-67)[768], 23rd June 1981; & JP - A - 56 41 517 (HITACHI SEISAKUSHO K.K.) 18-04-1981 * abstract * --- -/- | 1,3,4 | G 11 B |

The present search report has been drawn up for all claims

| Place of search THE HAGUE | Date of completion of the search 11-09-1984 | Examiner FUX J. |
|---|---|---|

European Patent
Office

**EUROPEAN SEARCH REPORT**

Application number

EP 84 20 0826

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | PATENTS ABSTRACTS OF JAPAN, vol. 1, no. 52, 20th May 1977, page 3477 E 76; & JP - A - 51 148 413 (FUJITSU K.K.) 20-12-1976 * abstract * | 1 | |
| | --- | | |
| A | PATENTS ABSTRACTS OF JAPAN, vol. 5, no. 36 (P-51)[708], 7th March 1981, page 28 P 51; & JP - A - 55 157 121 (NIPPON DENSHIN DENWA KOSHA) 06-12-1980 * abstract * | 1,3,4 | |
| | --- | | |
| A | PATENTS ABSTRACTS OF JAPAN, vol. 7, no. 70 (P-185)[1215], 23rd March 1983; & JP - A - 58 1820 (SONY K.K.) 07-01-1983 * abstract * | 1,3 | |
| | --- | | TECHNICAL FIELDS SEARCHED (Int. Cl. ³) |
| A | RESEARCH DISCLOSURE, no. 225, January 1983, page 17, disclosure no. 22511, Havant, Hampshire, GB; "Magnetic head having highly saturable gap liner" * whole document * | 1-4 | |
| | --- | | |
| A | PATENTS ABSTRACTS OF JAPAN, vol. 1, no. 148, 29th November 1977, page 7716 E 77; & JP - A - 52 89 308 (HITACHI SEISAKUSHO K.K.) 26-07-1977 * abstract * | 1 | |
| | ---     -/- | | |

The present search report has been drawn up for all claims

| Place of search | Date of completion of the search | Examiner |
|---|---|---|
| THE HAGUE | 11-09-1984 | FUX J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82

0128625

| | **DOCUMENTS CONSIDERED TO BE RELEVANT** | | Page 3 | |
|---|---|---|---|---|
| Category | Citation of document with indication, where appropriate, of relevant passages | Relevant to claim | CLASSIFICATION OF THE APPLICATION (Int. Cl. ³) | |
| A | PATENTS ABSTRACTS OF JAPAN, vol. 3, no. 81 (E-122), 12th July 1979, page 76 E 122; & JP - A - 54 58 425 (NIPPON DENKI K.K.) 11-05-1979 * abstract * | 1 | | |
| | --- | | | |
| A | EP-A-0 035 943 (L.C.C.-C.I.C.E.-COMPAGNIE EUROPEENNE DE COMPOSANTS ELECTRONIQUES) * page 5, lines 26-31; page 7, line 23 - page 8, line 15; figures 2,10,11,12 * | 1 | | |
| | ----- | | | |
| | | | TECHNICAL FIELDS SEARCHED (Int. Cl. ³) | |

The present search report has been drawn up for all claims

| Place of search THE HAGUE | Date of completion of the search 11-09-1984 | Examiner FUX J. |
|---|---|---|